(19)

**Europäisches Patentamt**
**European Patent Office**
**Office européen des brevets**

(11) **EP 1 862 288 A1**

(12) **EUROPEAN PATENT APPLICATION**

(43) Date of publication:
**05.12.2007 Bulletin 2007/49**

(51) Int Cl.:
*B29C 41/04* (2006.01)   *B29C 41/52* (2006.01)

(21) Application number: **06114620.5**

(22) Date of filing: **29.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **TOTAL PETROCHEMICALS RESEARCH FELUY**
**7181 Seneffe (Feluy) (BE)**

(72) Inventors:
- **Maziers, Eric**
  **B-7180, Seneffe (BE)**
- **Pestiaux, Pierre**
  **F - 76400, Seneville sur Fécamp (FR)**

(54) **OPTIMISATION IN ROTOMOULDED APPLICATIONS.**

(57)   The present invention discloses a method for optimising the production of rotomoulded articles according to the desired properties of the end product by identifying and quantifying the processing variables that have an impact on each property of the finished rotomoulded article.

**FIGURE 1**

**Description**

The present invention discloses a method for optimising the production of rotomoulded articles according to the desired properties of the end product or for optimising the processing.

Polyethylene represents more than 80 % of the polymers used in the rotomoulding market. This is due to the outstanding resistance of polyethylene to thermal degradation during processing, to its easy grinding, good flowability, and low temperature impact properties.

Rotomoulding is used for the manufacture of simple to complex, hollow plastic products. It can be used to mould a variety of materials such as polyethylene, polypropylene, polycarbonate or PVC. Linear low density polyethylene is preferably used as disclosed for example in "Some new results on rotational moulding of metallocene polyethyles" by D. Annechini, E. Takacs and J. Vlachopoulos in ANTEC, vol. 1, 2001.

Polyethylenes prepared with a Ziegler-Natta catalyst are generally used in rotomoulding, but metallocene-produced polyethylenes are desirable, because their narrow molecular distribution allows better impact properties and shorter cycle time in processing.

The metallocene-produced polyethylenes of the prior art (see ANTEC, vol. 1, 2001) suffer from high shrinkage and warpage.

Plastoelastomeric compositions such as described in US-5,457,159 can also be used in rotomoulding, but they require complex processing steps of mixing and vulcanisation.

US-6,124,400 discloses the use for rotomoulding of polymer alloys containing semicrystalline polyolefin sequences with chains of different controlled microstructure prepared in a "one-pot" polymerisation process from a single monomer. The polymerisation of these polymer alloys requires a complex catalyst system comprising organometallic catalyst precursors, cationic forming cocatalysts and cross-over agents.

Rotomoulding is generally used in applications that have complex shapes and require precise architecture and properties depending upon the end use: for example, a toy does not require the same properties as a fuel tank. It is thus necessary to adjust the processing conditions in order to obtain the properties required in the final product. This adjustment is generally carried out on a trial and error basis that can be long and tedious as there are many variables in the process such as for example, nature of the resin, cycle time, oven temperature, peak internal air temperature, cooling system and more.

There is thus a need for an efficient method to select the parameters that will lead quickly to the final rortomoulded article having the desired properties.

It is an aim of the present invention to efficiently adjust the rotomoulding parameters in order to obtain the properties required in the final product.

It is also an aim of the present invention to create a direct and unique bi-directional path between the final product and the processing variables.

It is another aim of the present invention to determine which variables are associated with each property of the final product.

It is a further aim of the present invention to minimise uncontrollable factors.

It is yet another aim of the present invention to reduce the time elapsed between conception and development.

Any one of these aims has been fulfilled, at least partially, by the present invention.

Accordingly, the present invention discloses a method for optimising the production of rotomoulded articles that comprises the steps of:

i) identifying the specific processing variables that have an impact on each property of a rotomoulded article;
ii) establishing a numerical relationship between each property and its related processing variables as identified in step i);
iii) adjusting the processing variables in order to obtain a rotomoulded article having one or more desired properties;
iv) retrieving the rotomoulded article having the one or more desired properties.

A design of experiment (DOE) is used to determine the best possible numerical relationships between all variables. Several models are described in literature and they range from a simple linear model to more elaborate quadratic or cubic models or to models that include interactions. The present invention uses a linear model wherein the response Y is written as

$$Y = AX + B$$

wherein X is the matrix of experimental data.

The values of A and B are most accurately determined when matrix X is orthogonal, meaning that the variables are independent. It is thus important to create a set of experimental data for which the determinant of matrix X is maximised.

For each property, there is thus a linear numerical relationship established between said property and the relevant variables in a restricted range of oven temperature or peak internal air temperature.

The oven temperature was varied between 260 and 330 °C

The cooling type was selected between conventional or fast or slow.

The PIAT was varied between 175 and 250 °C.

A linear numerical relationship is established to determine the cycle time in terms of oven temperature, peak internal air temperature (PIAT) and type of cooling process.

A linear numerical relationship is established to determine the yellow index in terms of PIAT.

A linear numerical relationship is established to determine the bubble content in terms of PIAT and type of resin.

A linear numerical relationship is established to determine the spherulites' size in the finished product in terms of PIAT and type of resin.

A linear numerical relationship is established to determine the tensile properties of the rotomoulded article in terms of PIAT, type of resin and wall thickness of the finished articles.

A linear numerical relationship is established to determine impact properties in terms of nature of type of resin and wall thickness of the finished articles.

A linear numerical relationship is established to determine degradation of the finished article in terms of PIAT and time to reach PIAT.

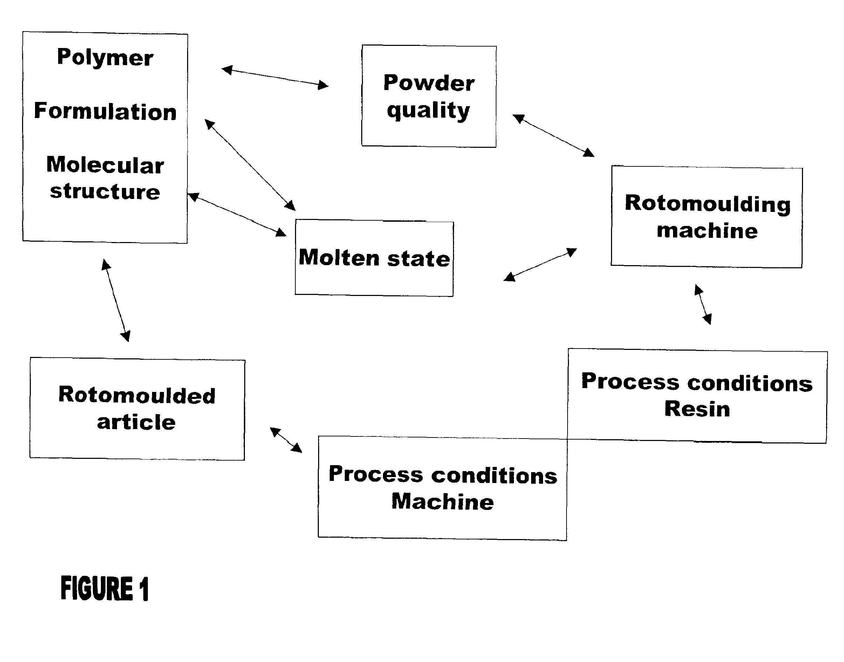

The present invention discloses the most efficient method to obtain rotomoulded articles having tailored properties according to desired use. The relationships established between the resin's molecular structure and formulation, the process parameters and the final rotomoulded article can all be used in direct or reverse order. It is possible either to predict the properties of the final rotomoulded article, knowing the recipe of the starting polymer and the process parameters or to adjust the starting resin formulation and process parameters to obtain desired properties. The most relevant interactions are represented schematically in Figure 1.

The polymers are typically characterised by their molecular structure and by the formulation of their additive package. The molecular structure itself is determined by the way the resin has been prepared: for example resins prepared with Ziegler-Natta catalyst system have different properties than resins prepared with chromium-based catalyst system or than resins prepared with metallocene catalyst systems. The nature of the metallocene catalyst component also plays a role in determining the resin's characteristics such as short or long chain branching, polydispersity index, melt index.

The nature and formulation of the resins have an impact on the powder quality and the molten state properties.

The powder quality and the molten state properties determine the optimal process conditions

- for the resin, such as polymer melting, particle coalescence, densification, crystallisation, adhesion to mould;
- for the rotomoulding machine, such as type of machine, oven temperature, peak internal air temperature (PIAT), rotation speed, mould positioning, heating heterogeneity, heating method, demoulding agent, cooling method.

The physical aspect and mechanical properties of the rotomoulded articles are determined by all the processing parameters and by the resin nature and formulation.

In a preferred embodiment according to the present invention, the selected parameters are the resin's nature and formulation, the oven temperature, the PIAT, and the type of cooling. Their impact on the cycle time and the optical and mechanical properties are defined.

The cycle time (CT), in minutes, is represented by the linear equation

$$CT = C1 + (A) + B \times OT + C \times PIAT$$

wherein the cooling type is selected between conventional, fast or slow, OT is the oven temperature expressed in °C and PIAT is the peak internal air temperature also expressed in °C. Constant C1 and A, B and C factors are extracted by least square fit of the data and the cycle time results are explained with at least 88.5 % confidence by this relationship.

The yellow index (YI) is represented by the linear equation

$$YI = C2 + D \times PIAT$$

Constant C2 and D factor are extracted by least square fit of the data and the yellow index results are explained with at least 85.3 % confidence by this relationship. The yellow index is determined using the method of standard test ASTM-D-1925.

The bubbles content (BC), expressed in percentage of total surface occupied by bubbles, is represented by the linear equation

$$BC = C3 + E + F \times PIAT$$

wherein E is a constant related to the type of resin. Constant C3 and E and F factors are extracted by least square fit of the data and the bubbles content results are explained with at least 87.2 % confidence by this relationship.

The spherulite size (SS), expressed in $\mu$m, is represented by the linear equation

$$SS = C4 + G + H \times PIAT$$

wherein G is a constant related to the type of resin. Constants C4 and G and H factor are extracted by least square fit of the data and the spherulite size results are explained with at least 91.1 % confidence by this relationship.

The degradation factor depends primarily from the PIAT, but also from the time necessary to reach the PIAT and from the cycle time.

The impact properties represented by the total energy (Etot,) expressed in Joules, are represented by the linear equation

$$Etot = C5 + J + K \times WT$$

wherein J is a constant related to the type of resin and WT represent the wall thickness in mm. Constants C5 and J and K factor are extracted by least square fit of the data and the total energy results are explained with at least 95 % confidence by this relationship.

The tensile properties represented by the yield stress (YS) expressed in Mpa, are represented by the linear equation

$$YS = C6 + L + M \times WT + N \times PIAT$$

wherein L is a constant related to the type of resin. Constants C6 and L and M and N factors are extracted by least square fit of the data and the yield stress results are explained with at least 95 % confidence by this relationship.

All these relationships lead to a substantial reduction of the time needed between conception and development of new rotomoulded articles by more than 30 %.

They further define the optimal processing conditions necessary to obtain a finished rotomoulded article having the desired specifications with a confidence interval of at least 82 %, preferably of at least 88 % and more preferably of at least 90 %. **Examples.**

Several types of resins were tested.

Resin R1 was prepared with a catalyst system based on ethylene bistetrahydroindenyl zirconium dichloride.

Resin R2 is a first generation metallocene-prepared resin sold by Borealis under the trade name RM8343.

Resin R3 is a typical Ziegler-Natta resin sold by Dow Chemicals under the trade name Dowlex 2431.

All test mouldings were carried out on a ROTOSPEED rotational moulding machine. It is a carrousel-style machine with offset arm, LPG burner arm with a burner capacity of 523 kW/hr, air fan cooling, and a maximum plate diameter of 1.5 m.

A 30x30x30 cm aluminum box mould was used to produce the test mouldings. The mould was equipped with a draft angle to facilitate demoulding and the articles were prepared by the use of a drop box. The drop box was filled with the material needed and then attached to the lid of the mould. A pneumatic ram in the drop box held the material in place until the required temperature was reached, the ram was then activated and the material was dropped in.

The moulding conditions for the trials were selected as follows:

- rotation ratio: 4:1
- cooling medium: forced air
- preheated arm and mould
- rotolog unit n°5/ rotolog software version 2.7

The oven temperature was varied between 260 and 330 °C
The cooling type was selected between conventional or fast or slow.
The PIAT was varied between 175 and 250 °C.
For fast cooling and for resin R1, the cycle time was determined as a linear function of oven temperature and PIAT.

$$Ct = 7.71 - 0.043 \times (\text{oven temperature}) + 0.097 \times PIAT$$

The number of samples used to derive these coefficients was of 27 and the confidence interval was of 88.54 %.
Using this equation the cycle time was predicted as 52.34 minutes for resin R1, a wall thickness of 6 mm and an oven temperature of 200 °C. The observed value was of about 51 minutes, so well within the confidence interval.
The yellow index was determined using the method of standard test ASTM-D-1925. It was determined on 27 samples of resin R1and the relationship was established as

$$YI = -28.45 + 0.14 \times PIAT$$

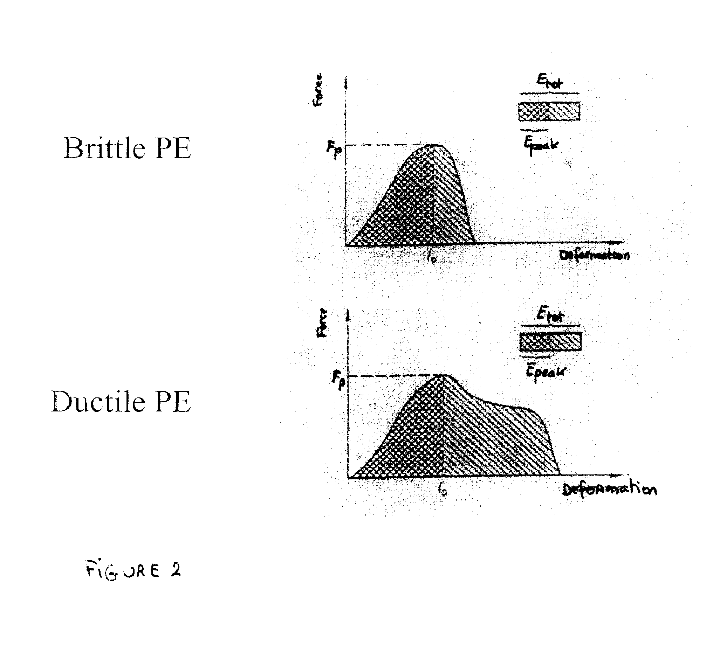

The confidence interval was of 0.85 %.
The average spherulite size SS was predicted for resins R1 and R2 and for a peak internal air temperature of 200 °C. For resin R1 it was of 13.4 $\mu$m and for resin R2 it was of 31.45 $\mu$m.
Impact tests were carried out using the method of standard test ISO 6602-3. This is a falling weight test that gives the resistance to shock. This test is used to determine the ductility index itself related to the ductile or brittle behaviour of the rotomoulded article. The ductility index is defined as the ratio $E_{prop}/E_{tot}$ wherein $E_{prop}$ is the propagation energy and $E_{tot}$ is the total energy itself defined by $E_{tot} = E_{peak} + E_{prop}$, E peak being the peak energy. This is represented in Figure 2. A brittle sample has a ductility index smaller than 0.40 and is characterised by a very small area past the peak energy leading to quick breakage. A ductile sample has a ductility index larger than 0.40 and has a large area past the peak energy and the material thus deforms for a substantial period of time before breaking.
For resin R1, the ductility index at a temperature of -20 °C was determined as DI = 50.87 - 39.45 x (percentage of total surface occupied by bubbles) - 0.37 x (spherulite size in $\mu$m)
The confidence interval was of 75%.
For resin R1 and for slow cooling, the Young modulus YO was determined as

$$YO = 570.66 + 0.189 \times (\text{oven temperature in °C})$$

The confidence interval was of 80%.
Many other properties were numerically determined using the same method and with the same predictive accuracy, thereby allowing a substantial reduction of the time elapsed between conception and development for new rotomoulded articles. For example, without using the method of the present invention, the time elapsed between conception and development was of from 1.25 to 2.6 years. With the method of the present invention, it was of from 0.7 to 1.7 years, representing a reduction of time of more than 30 %.

**Claims**

1. A method for optimising the production of rotomoulded articles that comprises the steps of:

    a) establishing a numerical relationship between the cycle time, and the oven temperature, peak internal air temperature (PIAT) and type of cooling process;

b) establishing a numerical relationship between the yellow index and the PIAT;

c) establishing a numerical relationship between the bubble content, and the PIAT and type of resin;

d) establishing a numerical relationship between the spherulites' size in the finished product, and the PIAT and type of resin;

e) establishing a numerical relationship between the tensile properties, and the nature of the resin, the thickness of the finished articles and the PIAT;

f) establishing a numerical relationship between impact properties, and the nature of the resin and the thickness of the finished articles;

g) establishing a numerical relationship between the degradation of the finished article, and the PIAT and time to reach PIAT;

h) adjusting the processing variables in order to obtain a rotomoulded article having one or more desired properties;

a) retrieving the rotomoulded article having the one or more desired properties.

2. The method of claim 1 wherein the numerical relationship is a linear relationship for an oven temperature of from 260 to 330 °C.

3. The method of any one of the preceding claims wherein the resin is produced by a bridged bis(tetrahydro-indenyl) catalyst component.

4. Use of the linear relationships of any one of claims 1 to 3 to reduce the time needed between conception and development of a new rotomoulded article by more than 30 %.

5. Use of the linear relationships of any one of claims 1 to 3 to optimise the processing conditions and retrieve a finished rotomoulded article having the desired specifications with a confidence interval of at least 82 %.

FIGURE 1

Brittle PE

Ductile PE

FIGURE 2

8

**European Patent Office** EUROPEAN SEARCH REPORT

Application Number

EP 06 11 4620

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALVIN SPENCE & ROB SCOTT: "Rotational Molding Process Control" ANTEC 2003 PLASTICS, vol. 1, 2003, pages 1241-1245, XP002405995 | 1,2,4,5 | INV. B29C41/04 B29C41/52 |
| Y | * page 1242, column 2, paragraph 2 * * figures 5,7-9 * | 3 | |
| X | MC CRAMEZ, MJ OLIVEIRA, RJ CRAWFORD: "Prediction of Degradation of Polyethylene during Rotational Molding" ANTEC 2000 PLASTICS: THE MAGICAL SOLUTION, vol. 1, 2000, XP002405996 * figures 5,7 * * table 2 * | 1,2,4,5 | |
| X | ERIC MAZIERS: "Metallocene Based Polyolefins for Rotational Molding Applications" ANTEC 2003 PLASTICS: ANNUAL TECHNICAL CONFERENCE, vol. 1, 2003, pages 1262-1266, XP002405998 * page 1264, paragraph 1 * * tables 3,4 * | 1 | |
| Y | US 2005/255264 A1 (MAZIERS ERIC [BE]) 17 November 2005 (2005-11-17) * page 1, paragraphs 1,30 * | 3 | TECHNICAL FIELDS SEARCHED (IPC) B29C |
| A | D ANNECHINI , E TAKACS, J VLACHOPOULOS: "Some New Results on Rotational Molding of Metallocene Polyethylenes" ANTEC 2001 PLASTICS: THE LONE STAR, vol. 1, 2001, XP002405997 * page 3, column 1, paragraph 2 * * figures 1,9 * | 1 | |

-/--

The present search report has been drawn up for all claims

| Place of search | Date of completion of the search | Examiner |
|---|---|---|
| The Hague | 8 November 2006 | BIBOLLET-RUCHE, D |

European Patent Office

**EUROPEAN SEARCH REPORT**

Application Number

EP 06 11 4620

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CRAWFORD, ROY J.; THRONE, JAMES L: "Rotational Molding Technology" 2002, WILLIAM ANDREW PUBLISHING/PLASTICS DESIGN LIBRARY 884207 , XP002406060 * page 256 - page 259 * ----- | 1 | |

TECHNICAL FIELDS SEARCHED (IPC)

The present search report has been drawn up for all claims

| Place of search | Date of completion of the search | Examiner |
|---|---|---|
| The Hague | 8 November 2006 | BIBOLLET-RUCHE, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ..................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 11 4620

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2006

| Patent document cited in search report | Publication date | Patent family member(s) | | Publication date |
|---|---|---|---|---|
| US 2005255264 A1 | 17-11-2005 | AU | 2003240600 A1 | 10-11-2003 |
| | | CN | 1649912 A | 03-08-2005 |
| | | WO | 03091294 A1 | 06-11-2003 |
| | | JP | 2005523954 T | 11-08-2005 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5457159 A

- US 6124400 A

**Non-patent literature cited in the description**

- **D. ANNECHINI ; E. TAKACS ; J. VLACHOPOU-LOS.** Some new results on rotational moulding of metallocene polyethyles. *ANTEC,* 2001, vol. 1

- *ANTEC,* 2001, vol. 1